**Europäisches Patentamt**

**European Patent Office**

**Office européen des brevets**

(11) Veröffentlichungsnummer: **0 068 347**
**A1**

(19)

(12) **EUROPÄISCHE PATENTANMELDUNG**

(21) Anmeldenummer: **82105343.6**

(22) Anmeldetag: **18.06.82**

(51) Int. Cl.³: **A 47 L 23/05**, A 46 B 11/02,
B 65 D 47/42

(30) Priorität: **27.06.81 DE 3125357**

(43) Veröffentlichungstag der Anmeldung: **05.01.83**
**Patentblatt 83/1**

(84) Benannte Vertragsstaaten: **AT BE CH DE FR GB IT LI LU
NL SE**

(71) Anmelder: **Henkel Kommanditgesellschaft auf Aktien,
Postfach 1100 Henkelstrasse 67,
D-4000 Düsseldorf 1 (DE)**

(72) Erfinder: **Türk, Erich, Locher Weg 64, D-4018 Langenfeld
(DE)**
Erfinder: **Bücheler, Herbert, Erlenweg 26,
D-4006 Erkrath 2 (DE)**

(54) **Vorrichtung zum Reinigen und pflegenden Behandeln einer Fläche.**

(57) Die Vorrichtung zum Reinigen und pflegenden Behandeln einer Fläche besteht aus einem eine Pflegeflüssigkeit aufnehmenden Behälter (1) mit einer durch einen Schraubverschlußdeckel (7) zu verschließenden, einen porösen Flüssigkeitsauftragskopf (6) enthaltenden Öffnung. Die dem Schraubverschlußdeckel (7) für ein Reinigen der Fläche vor dem Auftragen der Flüssigkeit zugeordnete Bürste (11) soll bei Verbrauch einer Vorrichtung weiter zu verwenden und auf die neue Vorrichtung zu adaptieren sein.

Die erfindungsgemäße Lösung besteht darin, daß der Bürstenboden (9) kappenförmig ausgestaltet ist und seinerseits auf den Verschlußdeckel (7) aufzustecken und dort durch Reibschluß festzuhalten ist.

P a t e n t a n m e l d u n g
D 6368 EP

"Vorrichtung zum Reinigen und pflegenden Behandeln
einer Fläche"

Die Erfindung betrifft eine Vorrichtung zum Reinigen und pflegenden Behandeln einer Fläche, insbesondere zum Auftragen eines flüssigen Schuhputzmittels auf Schuhe, bestehend aus einem eine Pflegeflüssigkeit aufnehmenden Behälter mit einer durch einen Schraubverschlußdeckel zu verschließenden, einen porösen Flüssigkeitsauftragskopf enthaltenden Öffnung, wobei dem Schraubverschluß deckel eine Bürste zum Reinigen der zu behandelnden Fläche zugeordnet ist.

Eine Vorrichtung dieser Art wird in dem DE-GM 79 19 748 beschrieben. Der Schraubverschlußdeckel besitzt hierbei einen die eigentliche Verschlußkappe des Auftragskopfes umgebenden Ringraum, der eine hohlzylindrische Ringbürste aufnimmt. Diese Ringbürste kann lose in den Ringraum eingesetzt sein und nach Abnahme des Verschlußdeckels vom Behälter aus dem Ringraum entnommen werden, um hiermit die zu behandelnde Fläche zu reinigen. Zwischen der Ringbürste und dem Verschlußdeckel kann auch eine gegenläufig zur Schraubverbindung zwischen Verschlußdeckel und Behälteröffnung verlaufende Schraubverbindung vorgesehen sein. Wenn dann der Verschlußdeckel vom Behälter abgeschraubt wird, gelangen die Borsten der Ringbürste gleichzeitig in ihre Betriebsstellung und können

D 6368 EP          2

bei Verwendung des Deckels als Bürstengriff zum Reinigen der zu behandelnden Fläche herangezogen werden.

Bei Verbrauch der Vorrichtung ist auch die Bürste wegzuwerfen.

Der Erfindung liegt die Aufgabe zugrunde, die Bürste und deren Befestigung so zugestalten, daß sie bei Verbrauch einer Vorrichtung weiter zu verwenden und auf die jeweils neue Vorrichtung zu adaptieren ist. Ferner soll eine für den normalen Gebrauch ausreichend feste Verbindung von Verschlußdeckel und Bürste geschaffen werden, die ein vorheriges Öffnen des Behälters nicht erforderlich macht und damit beispielsweise die Gefahr eines zufälligen Berührens des nach Abnahme des Deckels offenen Auftragskopfes ausschließt. Die erfindungsgemäße Lösung besteht darin, daß der Bürstenboden bzw. Bürstengriff der Bürste als Kappe mit von den Bürsten weggerichteter Öffnung der Kappeninnenseite ausgebildet ist und daß die Kappeninnenseite zum Aufstecken auf den Schraubverschlußdeckel an dessen Deckelaußenseite im Sinne eines lösbaren Stecksitzes mit Reibschluß angepaßt ist.

Durch die Erfindung wird demgemäß ein kappenförmig ausgestalteter Bürstengriff geschaffen, der seinerseits auf den Verschlußdeckel und damit problemlos auf die jeweils neue Vorrichtung aufzustecken ist, wenn die Umfangsfläche an der Kappeninnenseite und die Umfangsfläche an der Deckelaußenseite so angepaßt bzw. adaptiert sind, daß die Bürste nach Aufstecken durch Reibschluß festge-

D 6368 EP                    3

halten wird. Durch eine gewisse Konizität der korrespondierenden Flächen wird die Reibwirkung begünstigt
und damit ein für den normalen Gebrauch ausreichender
aber nicht zu fester Sitz zwischen Bürste und Deckelverschluß geschaffen. Normalerweise kann der Sitz so
fest sein, daß das Lösen von Bürste und Verschlußdeckel
nur bei Austausch des entleerten Behälters einschließlich Deckel erforderlich ist. Die Anschaffung der an
sich wesentlich mehr als einen Behälterinhalt überdauernden Bürste wird dann nur bei Verbrauch der Bürste
selbst erforderlich.

Patentanmeldung

D 6368 EP                    4


Anhand der schematischen Darstellung eines Ausführungsbeispiels werden weitere Einzelheiten der Erfindung erläutert. Es zeigen:

Fig. 1    ein Sprengbild einer Vorrichtung zum Reinigen
          und Pflegen von Schuhen mit Bürste; und
Fig. 2    die Bürste und den Verschlußdeckel im Schnitt.


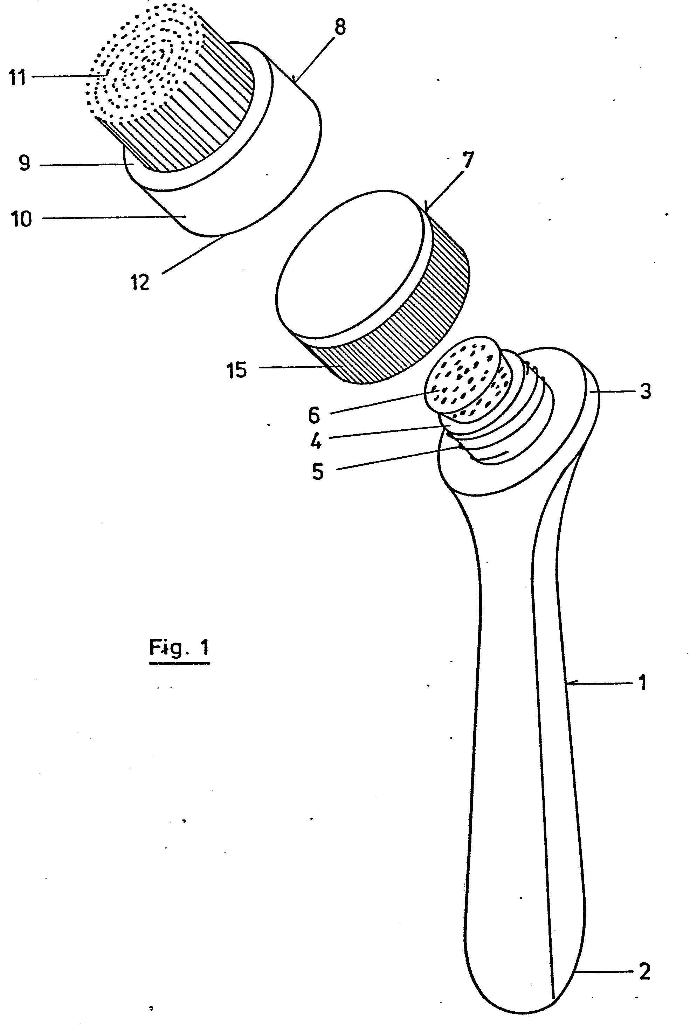

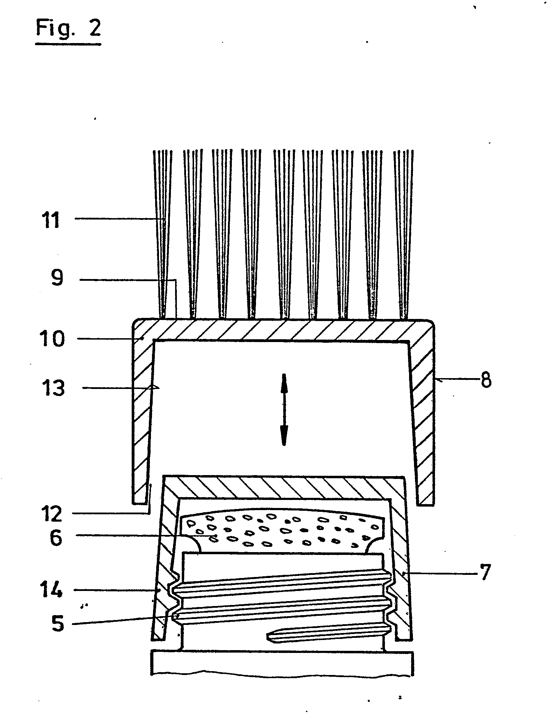

Die Vorrichtung gemäß Fig. 1 und 2 besteht aus einem
flaschenartigen Behälter 1 mit an seinem unteren Ende
vorgesehener ebener Standfläche 2 und an seinem oberen
Ende 3 angeordneter Öffnung mit nach außen ragendem hohlzylindrischen Ansatz 4, der auf der Außenseite ein Gewinde 5 besitzt und einen als aus elastischem, porösem
Material bestehender Pfropfen ausgebildeten Flüssigkeits-
Auftragskopf 6 aufnimmt. Der Auftragskopf 6 ragt teilweise aus dem Ansatz 4 hervor.


Bei Inbetriebnahme der Vorrichtung wird der Behälter 1
derart verkippt, daß die freiliegende Fläche des Auftragskopfes 6 mit der zu netzenden Fläche in Berührung
kommt. Bei entsprechendem Hin- und Herbewegen des Auftragskopfes 6 auf der zu behandelnden Fläche wird die im
Behälter 1 enthaltende Pflegeflüssigkeit durch den hohlzylindrischen Ansatz 4 hindurch aus den Poren des Auftragskopfes 6 auf die Fläche aufgetragen.


Zum Schutz des Auftragskopfes 6 vor ungewolltem bzw.
unnötigem Abgeben von Flüssigkeit und zum Schutz der
Umgebung vor Verschmutzung durch den Auftragskopf 6 wird
dieser in der Zeit der Nichtbenutzung mit Hilfe eines Schraubverschlußdeckels 7 durch Aufschrauben auf das Gewinde 5 verschlossen. Der Deckel 7 ist auf der Innenseite im Hinblick einen möglichst dichten Abschluß des Auftragskopfes 6 ausgebildet.

Erfindungsgemäß kann auf dem Schraubverschlußdeckel 7 eine insgesamt mit 8 bezeichnete Bürste kraftschlüssig aufgesetzt werden. Der Bürstenboden 9 der Bürste 8 ist als im wesentlichen zylindrische Kappe 10 mit von den Borsten 11 weggerichteter Öffnung 12 der Kappeninnenseite 13 ausgebildet. Letztere ist zum Aufstecken auf die Außenseite des Schraubverschlußdeckels 7 an die Deckelaußenseite 14 im Sinne eines lösbaren Stecksitzes mit Reibschluß angepaßt bzw. adaptiert. Vorzugsweise werden die den Reibschluß bewirkenden Flächen von Innenseite 13 der Kappe 10 am Bürstenboden 9 und Außenseite 14 von Schraubverschlußdeckel 7 im Hinblick auf eine Begünstigung der durch Zusammendrücken der Teile eingestellen Reibschlußkraft leicht konisch ausgebildet. In der Zeichnung wird die Konizität der Deutlichkeit wegen stark übertrieben dargestellt.

In einer zweckmäßigen Ausgestaltung der Außenfläche 14 des Schraubdeckels 7 wird auf dessen Umfang eine etwa parallel zur Deckelachse verlaufende Rifflung 15 vorgesehen.

0068347

**HENKEL KGaA**
ZR-FE/Patente

D 6368 FP          - 6 -

## Bezugszeichenliste

 1 = Behälter
 2 = Standfläche
 3 = oberes Ende
 4 = hohlzylindrischer Ansatz
 5 = Gewinde
 6 = Auftragskopf
 7 = Schraubverschlußdeckel
 8 = Bürste
 9 = Bürstengriff
10 = Kappe
11 = Borsten
12 = Öffnung
13 = Innenfläche
14 = Außenfläche
15 = Rifflung

0068347

HENKEL KGaA
ZR-FE/Patente

D 6368 FP                        - 7 -

P a t e n t a n s p r ü c h e

1. Vorrichtung zum Reinigen und pflegenden Behandeln einer Fläche, insbesondere zum Auftragen eines flüssigen Schuhputzmittels auf Schuhe, bestehend aus einem eine Pflegeflüssigkeit aufnehmenden Behälter (1) mit einer durch einen Schraubverschlußdeckel (7) zu verschließenden, einen porösen Flüssigkeits-Auftragskopf (6) enthaltenden Öffnung (4), wobei dem Schraubverschlußdeckel (7) eine Bürste (8) zum Reinigen der Fläche zugeordnet ist, dadurch gekennzeichnet, daß der Bürstenboden (9) der Bürste (8) als Kappe (10) mit von den Borsten (11) weggerichteter Öffnung (12) der Kappeninnenseite (13) ausgebildet ist und daß die Kappeninnenseite (13) zum Aufstecken auf den Schraubverschlußdeckel (7) an dessen Deckelaußenseite (14) im Sinne eines lösbaren Stecksitzes mit Reibschluß angepaßt ist.

2. Vorrichtung nach Anspruch 1, dadurch gekennzeichnet, daß die den Reibschluß bewirkenden Flächen von Innenseite (13) des Bürstengriffs (9) und Außenseite (14) von Schraubverschlußdeckel (7) im Hinblick auf ein Begünstigen der durch Zusammendrücken der Teile einzustellenden Reibschlußkraft leicht konisch ausgebildet sind.

3. Vorrichtung nach Anspruch 1 oder 2, dadurch gekennzeichnet, daß der Umfang des Schraubverschlußdeckels (7) eine etwa parallel zur Deckelachse verlaufende Rifflung (15) aufweist.

Fig. 1

Fig. 2

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 066 367 (SHEROSKY, F.) * Frontseite; Spalte 2, Zeilen 35-68; Spalte 3, Zeilen 1-32; Figuren 7,8 * | 1 | A 47 L 23/05<br>A 46 B 11/02<br>B 65 D 47/42 |
| A | US-A-2 869 168 (MORNEAULT, A.A.) * Spalte 2, Zeilen 5-69; Figuren 1,3 * | 2 | |
| A | FR-A-1 262 994 (N.V. PARFUMERIEFABRIEK "VALDELIS") | | |

**RECHERCHIERTE SACHGEBIETE (Int. Cl. ³)**

A 47 L
A 46 B
B 65 D

Der vorliegende Recherchenbericht wurde für alle Patentansprüche erstellt.

| Recherchenort | Abschlußdatum der Recherche | Prüfer |
|---|---|---|
| DEN HAAG | 04-10-1982 | MUNZER E. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82